# EUROPEAN PATENT SPECIFICATION

(11) **EP 2 112 788 B1**
(45) Date of publication and mention of the grant of the patent: **15.10.2014**
(21) Application number: 08706621.3
(22) Date of filing: 02.02.2008
(51) Int. Cl.: H04L 29/08

(54) **A METHOD AND NODE FOR P2P CONTENT SHARING**
VERFAHREN UND KNOTEN FÜR P2P-CONTENT-SHARING
PROCÉDÉ ET NOEUD POUR PARTAGE DE CONTENU P2P

(30) Priority: 28.03.2007 CN 200710073733
(43) Date of publication of application: 28.10.2009
(73) Proprietor: Huawei Technologies Co., Ltd., Longgang District, Shenzhen Guangdong 518129 (CN)
(72) Inventor: HU, Junling, Shenzhen Guangdong 518129 (CN); TU, Yongfeng, Shenzhen Guangdong 518129 (CN)
(74) Representative: Kreuz, Georg Maria
(86) International application number: PCT/CN2008/070245
(87) International publication number: WO 2008/116401

(56) References cited:
- CN-A- 1 852 381
- CN-A- 101 026 543
- US-A1- 2004 098 370
- US-A1- 2005 198 020
- BASET S A ET AL: "An Analysis of the Skype Peer-to-Peer Internet Telephony Protocol" INFOCOM 2006. 25TH IEEE INTERNATIONAL CONFERENCE ON COMPUTER COMMUNICA TIONS. PROCEEDINGS, IEEE, PI LNKD- DOI:10.1109/INFOCOM.2006.312, 1 April 2006 (2006-04-01), pages 1-11, XP031072352 ISBN: 978-1-4244-0221-2
- GUHA SAIKAT ET AL: "An Experimental Study of the Skype Peer-to-Peer VoIP System" INTERNET CITATION 1 April 2006 (2006-04-01), pages 1-6, XP002478870 Retrieved from the Internet: URL:http://saikat.guha.cc/pub/iptps06-skyp e.pdf [retrieved on 2008-04-29]
- JIM DOWLING ET AL: "Improving ICE Service Selection in a P2P System using the Gradient Topology" SELF-ADAPTIVE AND SELF-ORGANIZING SYSTEMS, 2007. SASO '07. FIRST INTER NATIONAL CONFERENCE ON, IEEE, PI, 1 July 2007 (2007-07-01), pages 285-288, XP031117905 ISBN: 978-0-7695-2906-6
- BAI W.: 'Problems in Application of NAT Traverse and its Solutions' COMPUTER DEVEOLOPMENT & APPLICATIONS vol. 18, no. 9, 05 September 2005, pages 22 - 24, XP008115690
- YANG Y.-H. ET AL.: 'Unified model for VoIP traverse of NAT and firewall based on P2P networks' JOURNAL OF COMPUTER APPLICATIONS vol. 26, no. 2, 28 February 2006, pages 292 - 294, XP008113605

## Description

### Field of the Technology

The present invention relates to the field of Internet technologies, and more particularly to a content sharing technique in the Internet.

### Background of the Invention

The conventional Internet adopts a client/server mode, and uses a centralized server on the website. However, the development trend of the Internet is from centralization to decentralization, and the centralized server is turned into distributed servers, for example, the peer-to-peer (P2P) technology.

The P2P technology integrates multiple users into a network, so as to share the bandwidth and co-process the information in the network. Different from the conventional client/server mode, in the P2P working mode, each client terminal functions as both the client and the server.

In "An Analysis of the Skype Peer-to-Peer Internet Telephony Protocol" (published by Salman A. Baset and et al at 1 April 2006 in INFOCOM 2006.25th IEEE International Conference on Computer Communications.), Salman A. Baset discloses that Skype is a peer-to-peer VoIP client developed in 2003 by the organization that created Kazaa. Skype claims that it can work almost seamlessly across NATs and firewalls and has better voice quality than other VoIP clients. It encrypts calls end-to-end, and stores user information in a decentralized fashion. Skype also supports instant messaging and conferencing. This paper analyzes key Skype functions such as login, NAT and firewall traversal, call establishment, media transfer, codecs, and conferencing under three different network setups. Analysis is performed by careful study of the Skype network traffic and by intercepting the shared library and system calls of Skype. We draw a map of super nodes to which Skype establishes a TCP connection at login.

In "An Experimental Study of the Skype Peer-to-Peer VoIP System" (published by Saikat Guha and et al at 1 April 2006 in Internet Citation), Saikat Guha discloses that despite its popularity, relatively little is known about the traffic characteristics of the Skype VoIP system and how they differ from other P2P systems. We describe an experimental study of Skype VoIP traffic conducted over a five month period, where over 82 million datapoints were collected regarding the population of online clients, the number of supernodes, and their traffic characteristics. This data was collected from September 1, 2005 to January 14, 2006. Experiments on this data were done in a black-box manner, i.e., without knowing the internals or specifics of the Skype system or messages, as Skype encrypts all user traffic and signaling traffic payloads. The results indicate that although the structure of the Skype system appears to be similar to other P2P systems, particularly KaZaA, there are several significant differences in traffic. The number of active clients shows diurnal and work-week behavior, correlating with normal working hours regardless of geography. The population of supernodes in the system tends to be relatively stable; thus node churn, a significant concern in other systems, seems less problematic in Skype. The typical bandwidth load on a supernode is relatively low, even if the supernode is relaying VoIP traffic. The paper aims to aid further understanding of a significant, successful P2P VoIP system, as well as provide experimental data that may be useful for future design and modeling of such systems. These results also imply that the nature of a VoIP P2P system like Skype differs fundamentally from earlier P2P systems that are oriented toward file-sharing, and music and video download applications, and deserves more attention from the research community.

US 2004/0098370 A1 discloses a system that includes a computer coupled to a database and a network. The computer including an interception device adapted to make a copy of a plurality of search requests from the network, and a transfer device adapted to transfer the plurality of search requests from the computer to the database.

P2P sharing download is a common download mode. Hundreds of thousands of network users worldwide use bit torrent (BT) software to download entire movies, MP3, and large-scale software everyday, and the data traffic is above 70% of the world's total Internet data traffic. In the process of sharing download, each user terminal among multiple users that need to download the same file is only required to download a segment of the file and then exchanges with one another, so that each user may get the complete file eventually.

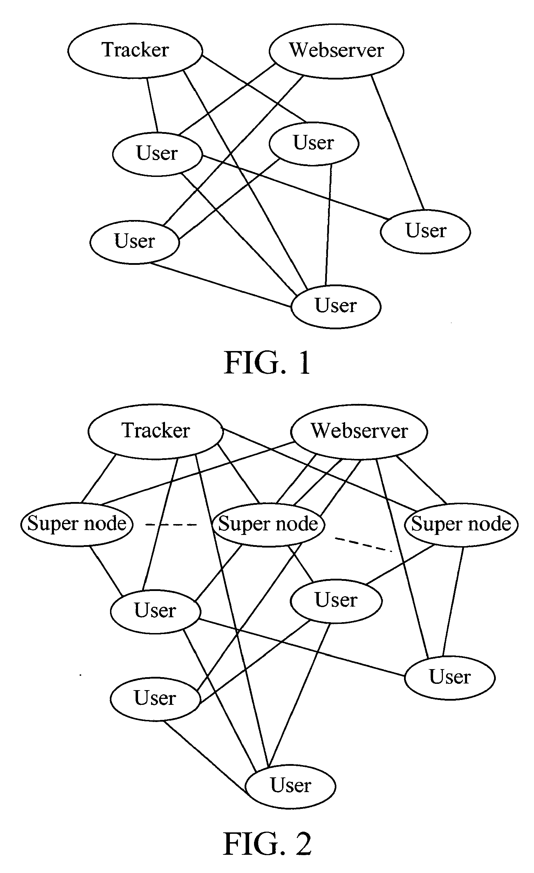

In the current P2P sharing download mode, BT is widely applied. As shown in FIG. 1, the network model of BT includes: a Webserver for placing files with suffix .torrent, a Tracker in charge of users finding each other, and common users.

The process of realizing BT sharing download specifically includes the following steps.
1. Users that intend to share the content publish a file with suffix .torrent on a common Webserver, in which the file contains the length, name, and hash information about the shared file, Universal Resource Locator (URL) of the Tracker, and the like.
2. Users that want to get the shared content download the .torrent file from the common website Webserver and obtain the URL of the Tracker.
3. The users (including those intending to share the content and those wanting to get the shared content) communicate with the Tracker, and report to the Tracker that they are online and acquire the list of other peers (referring to the users that intend to share the content and those that want to get the shared content) from the Tracker.
4. A peer having the complete file is called a seed, and the users that intend to share the file divide the file into a plurality of fragments which are suitable for fragment sharing.
5. All the peers are in communication with each other to share the file, in which each peer requests its desired fragments from the other peers, and meanwhile distributes its own fragments to those requesting them.
6. After all the file content has been downloaded, exit the entire sharing process.

It can be seen from the above BT sharing process that, the P2P network for BT sharing is a typical "all for one, and one for all" network, through which the resources of each user are fully shared. However, in this network, due to the true "equality", no one wants to do any additional work "voluntarily", so that the network has certain limitations which mainly lie in the following two points.
1. When two users are behind network address translation (NAT), the addresses of the users are private network addresses, and the private network addresses cannot be directly accessed from the outside. In order to directly access the equipment in the private network, a mechanism of Simple Traversal of UDP Through Network Address Translators (STUN) or Traversal Using Relay NAT (TURN) is needed. However, in the current BT network, no corresponding unit can be adopted to coordinate and complete the work, so that the direct access of P2P cannot be realized.
2. When the network is an asymmetrical network, the overall sharing access rate is limited by the minimum rate, for example, in an asymmetrical digital subscriber line (ADSL) network, a typical down-rate is 8 M and a typical up-rate is 512 K. Simply from one user's point of view, as a plurality of other users may provide upload services for the user simultaneously, even if the up-rate of each user is not high enough, the total rate of the plurality of users may satisfy the requirement of one user for high-speed download. However, taking the situation of the whole network into account, under complete P2P, the total up-rate is definitely equal to the total down-rate. Therefore, even if the downlink bandwidth is wide enough, due to the limitation of the up-rate, the average down-rate of the users can only be the average up-rate of the network.

### SUMMARY OF THE INVENTION

Accordingly, the present invention is directed to a method and node for peer-to-peer (P2P) content sharing, which are capable of solving the problem in the prior art that the private network user node cannot realize P2P sharing and the P2P sharing access rate is limited by the lower rate in the up-rate and the down-rate.

In order to achieve the above objectives, the present invention provides the following technical solutions.

A method for bit torrent (BT) content sharing, including:
registering a user node to a tracker as a super node when detecting that IP address of the user node is a public IP address and processing capability, storage space, and bandwidth of the user node satisfies conditions to be a super node;
sharing, by the super node, fragments with a common user node according to a request for fragments from the common user node; and
allocating, by the super node, a public IP address and a port number for a private network user node, wherein the private network user node uploads its own fragments to be shared by other user nodes and downloads fragments from other user nodes through either the public IP address and the port number or the super node as an agent for forwarding;
wherein sharing, by the super node, fragments with the common user node according to a request for fragments from the common user node includes:
   receiving, by the super node, a request for fragments from a common user node, and checking itself to see whether the fragments requested by the common user node are stored therein or not, wherein if yes, the super node uploads its stored fragments to be shared by the common user node; otherwise, the super node requests the fragments desired by the common user node from other super nodes or common user nodes and uploads the obtained fragments to be shared by the common user node;
   wherein before receiving, by the super node, the request for fragments from the common user node, the method further includes:
      obtaining, by the common user node, a super node list from a tracker, and sending the request for fragments to at least one super node in the super node list; and
      the requesting, by the super node, the other super nodes or common user nodes for the fragments desired by the common user node comprises: randomly selecting, by the super node, a part of the fragments desired by the common user node, and requesting the other super nodes or common user nodes for the selected part.

A super node for performing bit torrent, BT, content sharing, including:
a super node registration module, adapted to register a user node to a tracker as a super node when detecting that IP address of the user node is a public IP address and processing capability, storage space, and bandwidth of the user node satisfies conditions to be a super node;
a sharing module, adapted to share fragments to a common user node according to a request for fragments from the common user node;
an allocation module, adapted to allocate a public IP address and a port number for a private network user node, wherein the private network user node uploads its own fragments to be shared by other user nodes and downloads fragments from other user nodes through either the public IP address and the port number or the super node as an agent for forwarding; and
a fragment request processing module, adapted to receive a request for fragments from a common user node, and check itself to see whether the fragments requested by the common user node are stored therein or not, wherein if yes, the processing module uploads its stored fragments to be shared by the common user node; otherwise, the processing module requests the fragments desired by the common user node from other super nodes or common user nodes and uploads the obtained fragments to be shared by the common user node;
wherein. the processing module requests the fragments desired by the common user node from other super nodes or common user nodes includes: randomly selecting a part of the fragments desired by the common user node, and requesting the other super nodes or common user nodes for the selected part;
a super node list is obtained from a tracker, and the request for fragments is sent to at least one super node in the super node list.

According to the present invention, in order to overcome the disadvantages of the prior art, a user node satisfying certain conditions serves as a super node, which plays a coordinating and relaying role for a private network user node in traversing NAT. Furthermore, when having no download requirements, the super node provides upload services voluntarily to compensate for an excessively low up-rate, so as to make the up-rate meet the requirements of the down-rate, thereby assisting the private network user node behind NAT to traverse NAT and achieving P2P transmission. Meanwhile, the problem that the overall sharing rate is limited by the minimum rate in the network where the up-rate and down-rate are unsymmetrical is resolved, and thus real-time P2P business applications with high requirements for bandwidth are made possible.

### BRIEF DESCRIPTION OF THE DRAWINGS

FIG. 1 is a BT network architecture diagram in the prior art;
FIG. 2 is a BT network architecture diagram according to an embodiment of the present invention;
FIG. 3 is a flow chart of a super node providing upload services according to an embodiment of the present invention; and
FIG. 4 is a flow chart of a super node assisting a private network user node to traverse NAT according to an embodiment of the present invention.

### DETAILED DESCRIPTION OF THE EMBODIMENTS

Hereinafter, the present invention is further described in detail below through the embodiments with reference to the accompanying drawings.

According to the technical solutions provided in the embodiments of the present invention, in an existing BT network architecture, a user node satisfying certain conditions serves as a super node, which plays a coordinating and relaying role as an STUN Server or a TURN Server for a private network user node in traversing NAT. Moreover, when having no download requirements, the super node provides upload services voluntarily to compensate for an excessively low up-rate, so as to make the up-rate meet the requirements of the down-rate.

In order to make the objectives, technical solutions, and advantages of the present invention comprehensible, embodiments are described in detail below with the accompanying drawings. It should be understood that, the embodiments described herein are only intended to explain the present invention, instead of limiting the same.

The network architecture according to an embodiment of the present invention is shown in FIG. 2, in which a super node is introduced into the existing BT network architecture. The super node can be replaced by a common user node satisfying the following conditions: having a public IP address, capable of being directly accessed by other user nodes; having sufficient processing capability; having enough storage space for storing shared content; and having enough bandwidth.

Besides following all the processes of the common user node, the super node also needs to identify that it is a super node when registering to a Tracker, so that the Tracker and other user nodes may be notified which nodes are super nodes during information interaction.

With no download requirements, the super node does not care about the specific content of the downloaded file, and may not actively download .torrent file from the Webserver. Thereby, the discovery mechanism of the Tracker needs to be modified accordingly, so that the IP address or domain name of the Tracker is no longer obtained from the .torrent file, but pre-set in each user node. The specific process of a common user node registering to the Tracker as a super node is provided below.
1. The user node finds the Tracker through the pre-set Tracker IP address or domain name.
2. The user node acquires a super node list from the Tracker.
3. The super node integrates the functions of an STUN Server, and the common user node integrates the functions of an STUN Client. The STUN Client communicates with the STUN Server, and determines whether the IP address of the user node is a public IP address or a private IP address. Specifically, the STUN Client first sends a probe packet to the STUN Server, and the packet payload (except the IP header) contains the IP address of its own. When the packet traverses NAT, the IP address of the header is changed into the public IP address of the NAT, but the IP address in the payload stays the same. Therefore, when receiving the probe packet, the STUN Server compares to see whether the source IP of the packet header is identical to the IP address of the payload, so as to determine whether the STUN Client has traversed NAT, and then returns a response packet to the STUN Client. The packet payload carries the public IP address therein, and the STUN Client compares the header destination IP address of the response packet with the payload IP address to see whether it has traversed NAT.

If the STUN Client is behind NAT, the STUN Server notifies other users about the IP address and the port number of the STUN Client after traversing NAT, and thus the other users can access the STUN Client.
4. When finding that its own IP address is a public IP address, the user node checks itself to see whether the processing capability, storage space, and bandwidth satisfy the conditions of the super node, and if yes, registers to the Tracker as the super node.

After the user node satisfying the conditions has registered to be the super node, the super node achieves two functions in the BT network architecture: one is to provide upload services when not downloading any files itself; and the other is to assist users with private network addresses to traverse NAT.

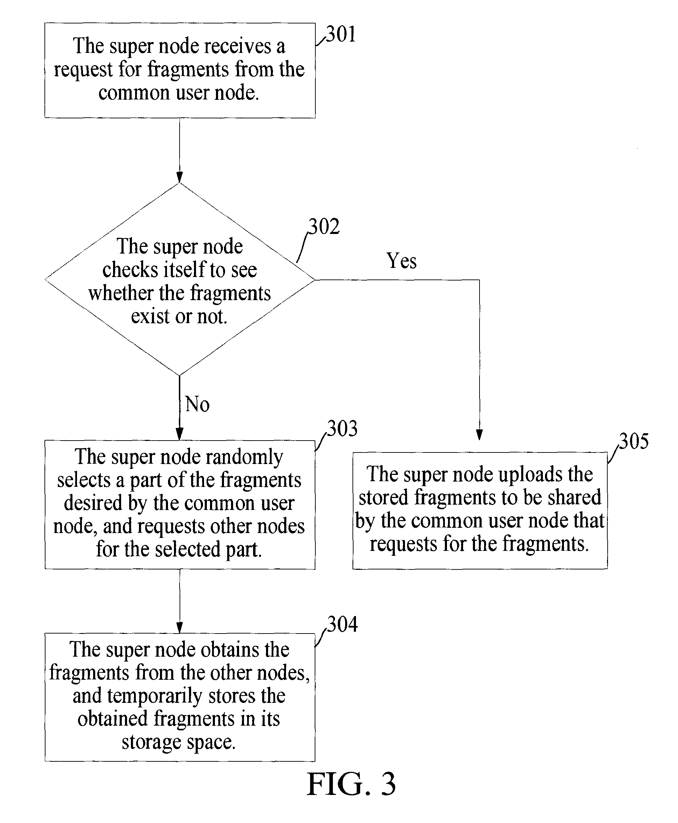

The process of the super node providing upload services when not downloading any files itself is shown in FIG. 3.

In Step 301, the super node receives a request for fragments from the common user node.

In Step 302, the super node analyzes the request for fragments from the common user node, and checks itself to see whether the fragments exist or not. If not, proceed to Step 3; otherwise, proceed to Step 5.

In Step 303, the super node randomly selects a part of the fragments desired by the common user node, and requests other nodes (including super nodes and common user nodes) for the selected part.

In Step 304, the super node obtains the fragments from the other nodes, and temporarily stores the obtained fragments in its storage space.

After Step 304, the process proceeds to Step 305, or returns to Step 301.

In Step 305, the super node uploads the stored fragments to be shared by the common user node that requests for the fragments.

In the above process, the most important point is that the super node does not download all the fragments, but randomly downloads a part of the fragments, so as to avoid the competition for bandwidth between the super node and the common user node. Although the super node only has a part of the fragments, if the number of the super nodes is sufficient, all the super nodes can be integrated to obtain the complete fragments, and each super node repeatedly uploads to share the part owned by itself, so that the problem of insufficient upload bandwidth can be effectively solved.

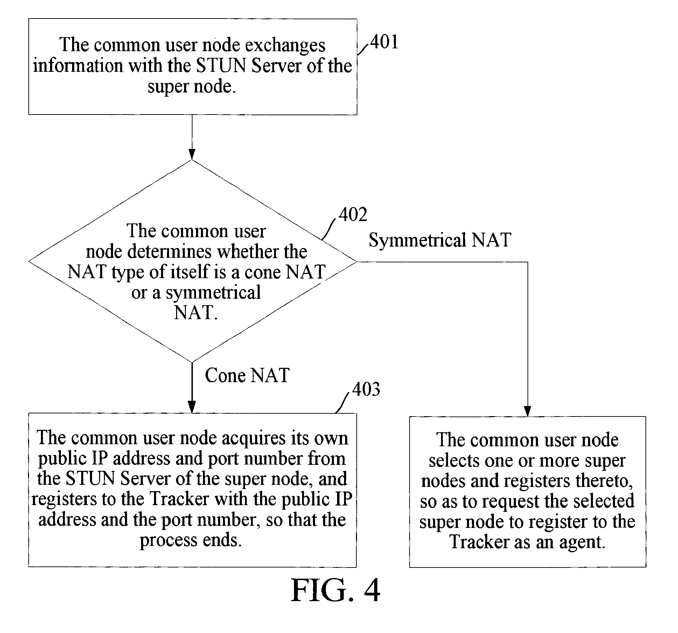

The specific process of the super node assisting a common user node merely having a private network address to traverse NAT is shown in FIG. 4, which includes the following steps.

In Step 401, when finding that its own IP address is a private IP address, the common user node exchanges information with the STUN Server of the super node.

In Step 402, the common user node determines whether the NAT type of itself is a cone NAT or a symmetrical NAT according to the exchanged information. If the result is a cone NAT, proceed to Step 403; and if the result is a symmetrical NAT, proceed to Step 404.

In Step 403, if the result is a cone NAT, the common user node acquires its own public IP address and port number from the STUN Server of the super node, and registers to the Tracker with the public IP address and the port number, so that other user nodes (including common user nodes and super nodes) may access the common user node through the public IP address and the port number issued by the common user node, and directly perform P2P transmission. Then, the process ends.

In Step 404, if the result is a symmetrical NAT, the common user node selects one or more super nodes and registers thereto, so as to request the selected super node to register to the Tracker as an agent. The super node registers with its own public IP address, and subsequently the common user node uploads and downloads files through the super node as an agent for forwarding. The super node serves as the TURN Server for NAT traversal.

According to an embodiment of the present invention, the structure of a user node capable of serving as a super node mainly includes a super node registration module and a fragment request processing module.

The super node registration module is adapted to register a user node to a tracker as a super node when detecting that the user node satisfies the conditions to be a super node.

The fragment request processing module is adapted to receive a request for fragments from a common user node, and check itself to see whether the fragments requested by the common user node are stored therein or not. If yes, the processing module uploads its stored fragments to be shared by the common user node; otherwise, the processing module requests the fragments desired by the common user node from other super nodes or common user nodes, and uploads the obtained fragments to be shared by the common user node.

According to an embodiment of the present invention, the structure of a private network user node mainly includes an NAT-type determining module and a registration module.

The NAT-type determining module is adapted to detect that the user node is a private network user node, then determine whether the NAT type of the user node is a cone NAT or a symmetrical NAT, and send the determination result to the registration module.

The registration module is adapted to receive the determination result sent by the NAT-type determining module. If the result is a cone NAT, the registration module requests a super node to allocate a public IP address and a port number to the user node, and registers to a tracker with the public IP address and the port number; and if the result is a symmetrical NAT, the registration module registers to at least one super node, and requests the super node to register to the tracker as an agent of the user node.

According to an embodiment of the present invention, the structure of the super node capable of assisting the private network user node to traverse NAT mainly includes a STUN server function module and a TURN server function module.

The STUN server function module is adapted to allocate a public IP address and a port number to a cone NAT private network user node, so that the private network user node registers to a tracker with the public IP address and the port number.

The TURN server function module is adapted to register to a tracker as an agent of a symmetrical NAT private network user node.

As described above, in the embodiments of the present invention, a user node satisfying certain conditions serves as a super node, which plays a coordinating and relaying role as an STUN Server or a TURN Server for a private network user node in traversing NAT. Moreover, when having no download requirements, the super node provides upload services voluntarily to compensate for an excessively low up-rate, so as to make the up-rate meet the requirements of the down-rate, thereby assisting the private network user node behind NAT to traverse NAT and achieving P2P transmission. Meanwhile, the problem that the overall sharing rate is limited by the minimum rate in the network where the up-rate and down-rate are unsymmetrical is resolved, and thus real-time P2P business applications with high requirements for bandwidth are made possible.

## Claims

1. A method for bit torrent, BT, content sharing, comprising:
registering a user node to a tracker as a super node when detecting that IP address of the user node is a public IP address and processing capability, storage space, and bandwidth of the user node satisfies conditions to be a super node;
sharing (305), by the super node, fragments with a common user node according to a request for fragments from the common user node; and
allocating (403), by the super node, a public IP address and a port number for a private network user node, wherein the private network user node uploads its own fragments to be shared by other user nodes and downloads fragments from other user nodes through either the public IP address and the port number or the super node as an agent for forwarding; wherein sharing, by the super node, fragments with the common user node according to a request for fragments from the common user node comprises:
receiving (301), by the super node, a request for fragments from a common user node, and checking (302) itself to see whether the fragments requested by the common user node are stored therein or not, wherein if yes (305), the super node uploads its stored fragments to be shared by the common user node; otherwise (303, 304), the super node requests the fragments desired by the common user node from other super nodes or common user nodes and uploads the obtained fragments to be shared by the common user node;
wherein before receiving, by the super node, the request for fragments from the common user node, the method further comprises:
obtaining, by the common user node, a super node list from a tracker, and sending the request for fragments to at least one super node in the super node list; and
the requesting, by the super node, the other super nodes or common user nodes for the fragments desired by the common user node comprises: randomly selecting (303), by the super node, a part of the fragments desired by the common user node, and requesting the other super nodes or common user nodes for the selected part.

2. The method according to claim 1 wherein before the private network user node uploads its own fragments, the method further comprises:
the private network user node interacts with the super node to determine (402) that its own network address translation, NAT, is a cone NAT, and then acquires (403) the public IP address and the port number from the super node so as to register to the tracker with the public IP address and the port number.

3. The method according to claim 1 wherein before the private network user node uploads its own fragments, the method further comprises:
the private network user node interacts with the super node to determine that its own NAT is a symmetrical NAT, and then requests the super node to register to the tracker as an agent, and the super node registers to the tracker with its own public IP address.

4. A super node for performing bit torrent, BT, content sharing, comprising:
a super node registration module, adapted to register a user node to a tracker as a super node when detecting that IP address of the user node is a public IP address and processing capability, storage space, and bandwidth of the user node satisfies conditions to be a super node;
a sharing module, adapted to share fragments to a common user node according to a request for fragments from the common user node;
an allocation module, adapted to allocate a public IP address and a port number for a private network user node, wherein the private network user node uploads its own fragments to be shared by other user nodes and downloads fragments from other user nodes through either the public IP address and the port number or the super node as an agent for forwarding; and
a fragment request processing module, adapted to receive a request for fragments from a common user node, and check itself to see whether the fragments requested by the common user node are stored therein or not, wherein if yes, the processing module uploads its stored fragments to be shared by the common user node; otherwise, the processing module requests the fragments desired by the common user node from other super nodes or common user nodes and uploads the obtained fragments to be shared by the common user node;
wherein. the processing module requests the fragments desired by the common user node from other super nodes or common user nodes comprises: randomly selecting a part of the fragments desired by the common user node, and requesting the other super nodes or common user nodes for the selected part;
a super node list is obtained from a tracker, and the request for fragments is sent to at least one super node in the super node list.

5. The super node according to claim 4, further comprising:
a Simple Traversal of UDP Through Network Address Translators, STUN, server function module, adapted to allocate a public IP address and a port number to a cone NAT private network user node, so that the private network user node registers to a tracker with the public IP address and the port number.

6. The super node according to claim 4, further comprising:
a Traversal Using Relay NAT, TURN, server function module, adapted to register to a tracker as an agent of a symmetrical NAT private network user node.

7. A system for bit torrent, BT, content sharing, comprising a tracker, a user node and the super node according to any one of claims 4 to 6, wherein the user node comprises:
a network address translation, NAT,-type determining module, adapted to detect that the user node is a private network user node, then determine whether the NAT type of the user node is a cone NAT or a symmetrical NAT, and send the determination result to a registration module; and
the registration module, adapted to receive the determination result sent by the NAT-type determining module, wherein if the result is a cone NAT, the registration module requests a super node to allocate a public IP address and a port number to the user node, and registers to a tracker with the public IP address and the port number; and if the result is a symmetrical NAT, the registration module registers to at least one super node, and requests the super node to register to the tracker as an agent of the user node.

## Patentansprüche

1. Verfahren zum gemeinsamen Verwenden von Inhalt mit BitTorrent, BT, das Folgendes umfasst:
Eintragen eines Anwenderknotens als einen Superknoten in eine Verfolgungseinheit, wenn detektiert wird, dass die IP-Adresse des Anwenderknotens eine öffentliche IP-Adresse ist und Verarbeitungsfähigkeit, Speicherplatz und Bandbreite des Anwenderknotens Bedingungen für einen Superknoten erfüllen;
gemeinsames Verwenden (305) durch den Superknoten von Fragmenten mit einem gewöhnlichen Anwenderknoten gemäß einer Anforderung von Fragmenten von dem gewöhnlichen Anwenderknoten; und
Zuweisen (403) einer öffentlichen IP-Adresse und einer Anschlussnummer für einen Anwenderknoten in einem privaten Netz durch den Superknoten, wobei der Anwenderknoten in einem privaten Netz seine eigenen Fragmente hochlädt, so dass sie von anderen Knoten gemeinsam verwendet werden können, und Fragmente von anderen Knoten entweder über die öffentliche IP-Adresse und die Anschlussnummer oder den Superknoten als einem Agenten zum Weiterleiten herunterlädt; wobei gemeinsames Verwenden von Fragmenten durch den Superknoten mit dem gewöhnlichen Anwenderknoten gemäß einer Anforderung von Fragmenten von dem gewöhnlichen Anwenderknoten Folgendes umfasst:
Empfangen (301) einer Anforderung von Fragmenten von einem gewöhnlichen Anwenderknoten durch den Superknoten und Selbstüberprüfen (302) um festzustellen, ob die Fragmente, die von dem gewöhnlichen Anwenderknoten angefordert sind, darin gespeichert sind oder nicht, wobei falls ja (305) der Superknoten seine gespeicherten Fragmente hochlädt, damit sie von dem gewöhnlichen Anwenderknoten gemeinsam verwendet werden können; andernfalls (303, 304) der Superknoten die durch den gewöhnlichen Anwenderknoten gewünschten Fragmente von anderen Superknoten oder gewöhnlichen Anwenderknoten anfordert und die erhaltenen Fragmente hochlädt, so dass sie durch den gewöhnlichen Anwenderknoten gemeinsam verwendet werden können;
wobei das Verfahren vor dem Empfangen der Anforderung von Fragmenten von dem gewöhnlichen Anwenderknoten durch den Superknoten ferner Folgendes umfasst:
Erhalten einer Superknotenliste durch den gewöhnlichen Anwenderknoten von einer Verfolgungseinheit und Senden der Anforderung von Fragmenten zu wenigstens einem Superknoten in der Superknotenliste; und
das Anfordern durch den Superknoten von Fragmenten, die durch den gewöhnlichen Anwenderknoten gewünscht sind, von anderen Superknoten oder gewöhnlichen Anwenderknoten Folgendes umfasst: zufälliges Auswählen (303) eines Teils der Fragmente, die durch den gewöhnlichen Anwenderknoten gewünscht sind, durch den Superknoten und Anfordern des ausgewählten Teils von den anderen Superknoten oder gewöhnlichen Anwenderknoten.

2. Verfahren nach Anspruch 1, wobei das Verfahren bevor der Anwenderknoten des privaten Netzes seine eigenen Fragmente hochlädt ferner Folgendes umfasst:
der Anwenderknoten des privaten Netzes wirkt mit dem Superknoten zusammen, um zu bestimmen (402), dass seine eigene Netzadressenumwertung (network address translation, NAT) eine konische NAT ist, und erfasst (403) dann die öffentliche IP-Adresse und die Anschlussnummer von dem Superknoten, um sich in die Verfolgungseinheit mit der öffentlichen IP-Adresse und der Anschlussnummer einzutragen.

3. Verfahren nach Anspruch 1, wobei das Verfahren bevor der Anwenderknoten des privaten Netzes seine eigenen Fragmente hochlädt ferner Folgendes umfasst:
der Anwenderknoten des privaten Netzes wirkt mit dem Superknoten zusammen, um zu bestimmen, dass seine eigene NAT eine symmetrische NAT ist, und fordert dann den Superknoten auf, sich in der Verfolgungseinheit als einen Agenten einzutragen, und der Superknoten trägt sich in der Verfolgungseinheit mit seiner eigenen öffentlichen IP-Adresse ein.

4. Superknoten zum Ausführen von gemeinsamem Verwenden von Inhalt mit BitTorrent, BT, der Folgendes umfasst:
ein Superknoteneintragungsmodul, das ausgelegt ist, einen Anwenderknoten als einen Superknoten in eine Verfolgungseinheit einzutragen, wenn detektiert wird, dass die IP-Adresse des Anwenderknotens eine öffentliche IP-Adresse ist und Verarbeitungsfähigkeit, Speicherplatz und Bandbreite des Anwenderknotens Bedingungen für einen Superknoten erfüllen;
ein Modul zum gemeinsamen Verwenden, das ausgelegt ist, Fragmente mit einem gewöhnlichen Anwenderknoten gemeinsam zu verwenden gemäß einer Anforderung von Fragmenten von dem gewöhnlichen Anwenderknoten;
ein Zuweisungsmodul, das ausgelegt ist, eine öffentlichen IP-Adresse und eine Anschlussnummer für einen Anwenderknoten in einem privaten Netz zuzuweisen, wobei der Anwenderknoten in einem privaten Netz seine eigenen Fragmente hochlädt, so dass sie von anderen Anwenderknoten gemeinsam verwendet werden können, und Fragmente von anderen Anwenderknoten entweder über die öffentliche IP-Adresse und die Anschlussnummer oder den Superknoten als einen Agenten zum Weiterleiten herunterlädt; und
ein Fragmentanforderungsverarbeitungsmodul, das ausgelegt ist, eine Anforderung von Fragmenten von einem gewöhnlichen Anwenderknoten zu empfangen und sich selbst zu überprüfen, um festzustellen, ob die Fragmente, die von dem gewöhnlichen Anwenderknoten angefordert sind, darin gespeichert sind oder nicht, wobei falls ja das Verarbeitungsmodul seine gespeicherten Fragmente hochlädt, damit sie von dem gewöhnlichen Anwenderknoten gemeinsam verwendet werden können; andernfalls das Verarbeitungsmodul die durch den gewöhnlichen Anwenderknoten gewünschten Fragmente von anderen Superknoten oder gewöhnlichen Anwenderknoten anfordert und die erhaltenen Fragmente hochlädt, so dass sie durch den gewöhnlichen Anwenderknoten gemeinsam verwendet werden können;
wobei das Anfordern der Fragmente, die von dem gewöhnlichen Anwenderknoten gewünscht sind, von anderen Superknoten oder gewöhnlichen Anwenderknoten durch das Verarbeitungsmodul Folgendes umfasst: zufälliges Auswählen eines Teils der Fragmente, die durch den gewöhnlichen Anwenderknoten gewünscht sind, und Anfordern des ausgewählten Teils von den anderen Superknoten oder gewöhnlichen Anwenderknoten;
eine Superknotenliste wird von einer Verfolgungseinheit erhalten, und die Anforderung von Fragmenten wird zu wenigstens einem Superknoten in der Superknotenliste gesendet.

5. Superknoten nach Anspruch 4, der ferner Folgendes umfasst:
ein Serverfunktionsmodul für einfachen Durchlauf von UDP durch Netzadressenumsetzer (Simple Traversal of UDP Through Network Address Translators server function module, STUN-Serverfunktionsmodul), das ausgelegt ist, eine öffentliche IP-Adresse und eine Anschlussnummer einem Anwenderknoten des privaten Netzes mit konischer NAT zuzuweisen, so dass sich der Anwenderknoten des privaten Netzes in einer Verfolgungseinheit mit der öffentlichen IP-Adresse und der Anschlussnummer einträgt.

6. Superknoten nach Anspruch 4, der ferner Folgendes umfasst:
ein Serverfunktionsmodul für Durchlauf unter Verwendung von Relais-NAT (Traversal Using Relay NAT server function module, TURN-Serverfunktionsmodul) das ausgelegt ist, sich in einer Verfolgungseinheit als einen Agenten eines Anwenderknoten eines privaten Netzes mit symmetrischer NAT einzutragen.

7. System zum gemeinsamen Verwenden von Inhalt mit BitTorrent, BT, das eine Verfolgungseinheit, einen Anwenderknoten und den Superknoten nach einem der Ansprüche 4 bis 6 umfasst, wobei der Anwenderknoten Folgendes umfasst:
ein Bestimmungsmodul für den Netzadressenumwertungstyp, NAT-Typ, das ausgelegt ist zu detektieren, dass der Anwenderknoten ein Anwenderknoten eines privaten Netzes ist, dann zu bestimmen, ob der NAT-Typ des Anwenderknotens ein konischer NAT oder ein symmetrischer NAT ist, und das Bestimmungsergebnis zu einem Eintragungsmodul zu senden; und
das Eintragungsmodul, das ausgelegt ist, das durch das Bestimmungsmodul für den NAT-Typ gesendete Bestimmungsergebnis zu empfangen, wobei dann, wenn das Ergebnis eine konische NAT ist, das Eintragungsmodul von einem Superknoten anfordert, dem Anwenderknoten eine öffentliche IP-Adresse und eine Anschlussnummer zuzuweisen, und sich mit der öffentlichen IP-Adresse und der Anschlussnummer in eine Verfolgungseinheit einträgt; und sich das Eintragungsmodul dann, wenn das Ergebnis eine symmetrische NAT ist, in wenigstens einen Superknoten einträgt und von dem Superknoten anfordert, dass er sich in der Verfolgungseinheit als einen Agenten des Anwenderknotens einträgt.

## Revendications

1. Procédé de partage de contenu bit torrent, BT, comprenant :
l'enregistrement d'un noeud d'utilisateur sur un suiveur en tant que super-noeud lors de la détection du fait que l'adresse IP du noeud d'utilisateur est une adresse IP publique et lorsque le traitement des capacités, de l'espace de stockage et de la bande passante du noeud d'utilisateur respecte des conditions lui permettant d'être un super-noeud ;
le partage (305), par le super-noeud, de fragments avec un noeud d'utilisateur commun conformément à une demande de fragments provenant du noeud d'utilisateur commun ; et
l'allocation (403), par le super-noeud, de l'adresse IP publique et d'un numéro de port pour un noeud d'utilisateur de réseau privé, dans lequel le noeud d'utilisateur de réseau privé télécharge ses propres fragments afin qu'ils soient partagés par d'autres noeuds d'utilisateur et rapatrie des fragments en provenance d'autres noeuds d'utilisateur soit par l'intermédiaire de l'adresse IP publique et du numéro de port, soit par l'intermédiaire du super-noeud en tant qu'agent de réacheminement, dans lequel le partage, par le super-noeud, de fragments avec le noeud d'utilisateur commun conformément à une demande de fragments provenant du noeud d'utilisateur commun comprend :
la réception (301), par le super-noeud, d'une demande de fragments en provenance d'un noeud d'utilisateur commun, et la vérification (302) par lui-même du fait de savoir si les fragments demandés par le noeud d'utilisateur commun y sont ou non stockés, dans lequel, si oui (305), le super-noeud télécharge ses fragments stockés afin qu'ils soient partagés par le noeud d'utilisateur commun ; sinon (303, 304), le super-noeud demande les fragments souhaités par le noeud d'utilisateur commun à d'autres super-noeuds ou d'autres noeuds d'utilisateurs communs et télécharge les fragments obtenus afin qu'ils soient partagés par le noeud d'utilisateur commun ;
dans lequel, avant la réception, par le super-noeud, de la demande de fragments en provenance du noeud d'utilisateur commun, le procédé comprend en outre :
l'obtention, par le noeud d'utilisateur commun, d'une liste de super-noeuds en provenance d'un suiveur, et l'envoi de la demande de fragments à au moins un super-noeud se trouvant dans la liste de super-noeuds ; et
la demande, par le super-noeud, aux autres super-noeuds ou noeuds d'utilisateurs communs, des fragments souhaités par le noeud d'utilisateur commun comprend : la sélection aléatoire (303), par le super-noeud, d'une partie des fragments souhaités par le super-noeud commun, et la demande aux autres super-noeuds ou noeuds d'utilisateurs communs de la partie sélectionnée.

2. Procédé selon la revendication 1, dans lequel, avant que le noeud d'utilisateur de réseau privé télécharge ses propres fragments, le procédé comprend en outre :
le noeud d'utilisateur de réseau privé interagit avec le super-noeud pour déterminer (402) que sa propre conversion d'adresse de réseau, NAT (Network Address Translation), est une NAT conique, puis acquiert (403) l'adresse IP publique et le numéro de port en provenance du super-noeud de manière à enregistrer sur le suiveur l'adresse IP publique et le numéro de port.

3. Procédé selon la revendication 1, dans lequel, avant que le noeud d'utilisateur de réseau privé télécharge ses propres fragments, le procédé comprend en outre :
le noeud d'utilisateur de réseau privé interagit avec le super-noeud pour déterminer que sa propre NAT est une NAT symétrique, puis demande au super-noeud de s'enregistrer sur le suiveur en tant qu'agent, et le super-noeud s'enregistre sur le suiveur avec sa propre adresse IP.

4. Super-noeud d'exécution de partage de contenu bit torrent, BT, comprenant :
un module d'enregistrement de super-noeud, apte à enregistrer un noeud d'utilisateur sur un suiveur en tant que super-noeud lors de la détection du fait que l'adresse IP du noeud d'utilisateur est une adresse IP publique et lorsque le traitement des capacités, de l'espace de stockage et de la bande passante du noeud d'utilisateur respecte des conditions lui permettant d'être un super-noeud ;
un module de partage, apte à partager des fragments avec un noeud d'utilisateur commun conformément à une demande de fragments provenant du noeud d'utilisateur commun ;
un module d'allocation, apte à allouer une adresse IP publique et un numéro de port pour un noeud d'utilisateur de réseau privé, dans lequel le noeud d'utilisateur de réseau privé télécharge ses propres fragments afin qu'ils soient partagés par d'autres noeuds d'utilisateurs et rapatrie des fragments en provenance d'autres noeuds d'utilisateurs soit par l'intermédiaire de l'adresse IP publique et du numéro de port, soit par l'intermédiaire du super-noeud en tant qu'agent de réacheminement ; et
un module de traitement de demande de fragments, apte à recevoir une demande de fragments en provenance du noeud d'utilisateur commun, et à vérifier par lui-même si les fragments demandés par le noeud d'utilisateur commun y sont ou non stockés, dans lequel, si oui, le module de traitement télécharge ses fragments stockés afin qu'ils soient partagés par le noeud d'utilisateur commun ; sinon, le module de traitement demande les fragments souhaités par le noeud d'utilisateur commun à d'autres super-noeuds ou noeuds d'utilisateurs communs et télécharge les fragments obtenus afin qu'ils soient partagés par le noeud d'utilisateur commun ;
dans lequel la demande, par le module de traitement, des fragments souhaités par le noeud d'utilisateur commun à d'autres super-noeuds ou noeuds d'utilisateurs communs comprend : la sélection aléatoire d'une partie des fragments souhaités par le noeud d'utilisateur commun et la demande aux autres super-noeuds ou noeuds d'utilisateurs communs de la partie sélectionnée ;
une liste de super-noeuds est obtenue en provenance d'un suiveur et la demande de fragments est envoyée à au moins un super-noeud se trouvant dans la liste de super-noeuds.

5. Super-noeud selon la revendication 4, comprenant en outre :
un module à fonction de serveur du type parcours simple de protocole UDP à travers des convertisseurs d'adresses de réseau, STUN (Simple Traversal of UDP Through Network Address Translators), apte à allouer une adresse IP publique et un numéro de port à un noeud d'utilisateur de réseau privé à NAT conique de manière à ce que le noeud d'utilisateur de réseau privé s'enregistre sur un suiveur avec l'adresse IP publique et le numéro de port.

6. Super-noeud selon la revendication 4, comprenant en outre :
un module à fonction de serveur de parcours utilisant une NAT relais, TURN (Traversal Using Relay NAT), apte à s'enregistrer sur un suiveur en tant qu'agent d'un noeud d'utilisateur de réseau privé à NAT symétrique.

7. Système de partage de contenu bit torrent, BT, comprenant un suiveur, un noeud d'utilisateur et le super-noeud selon l'une quelconque des revendications 4 à 6, dans lequel le noeud d'utilisateur comprend :
un module de détermination de type de conversion d'adresse de réseau, NAT, apte à détecter le fait que le noeud d'utilisateur est un noeud d'utilisateur de réseau privé, puis à déterminer si le type de NAT du noeud d'utilisateur est une NAT conique ou une NAT symétrique, et à envoyer le résultat de la détermination à un module d'enregistrement ; et
le module d'enregistrement, apte à recevoir le résultat de la détermination envoyé par le module de détermination de type de NAT, dans lequel, si le résultat est une NAT conique, le module d'enregistrement demande à un super-noeud d'allouer une adresse IP publique et un numéro de port au noeud d'utilisateur, et s'enregistre sur un suiveur avec l'adresse IP publique et le numéro de port ; et si le résultat est une NAT symétrique, le module d'enregistrement s'enregistre sur au moins un super-noeud et demande au super-noeud de s'enregistrer sur le suiveur en tant qu'agent du noeud d'utilisateur.
